# FASCICULE DE BREVET EUROPEEN

(11) **EP 2 632 085 B1**
(45) Date de publication et mention de la délivrance du brevet: **09.05.2018**
(21) Numéro de dépôt: 13305180.5
(22) Date de dépôt: 18.02.2013
(51) Int. Cl.: H04L 12/28, H04M 3/60

(54) **Système de brassage multimédia**
Multimedia-Schaltsystem
Switching system for multimedia

(30) Priorité: 27.02.2012 FR 1200561
(43) Date de publication de la demande: 28.08.2013
(73) Titulaire: Schneider Electric Industries SAS, 92500 Rueil-Malmaison (FR)
(72) Inventeur: Perrin, Alain, 38050 GRENOBLE Cedex 09 (FR)
(74) Mandataire: Tripodi, Paul

(56) Documents cités:
- WO-A1-2007/025542
- US-A- 5 515 037
- US-A1- 2006 239 425
- "UTE C 90-483 01/04/2007, C90-483 Systèmes de câblage résidentiel des réseaux de communication // Residential cabling systems of communication networks", UNION TECHNIQUE DE L'ÉLECTRICITÉ, FR, vol. C90-483, 1 avril 2007 (2007-04-01), pages 1-47, XP009133618,

## Description

### Domaine technique de l'invention

La présente invention se rapporte à un système de brassage multimédia.

### Etat de la technique

Un système de brassage multimédia est aujourd'hui couramment employé dans une habitation. Il permet de pouvoir diffuser différents services dans les pièces de l'habitation. Ces services sont par exemple la téléphonie en analogique, la téléphonie sur IP ("Internet Protocol"), l'échange de données via Internet, la télévision... Pour obtenir le service, chaque appareil doit se raccorder sur une prise spécifique. Il s'agit d'une prise comportant un connecteur au standard RJ11 pour le téléphone, une prise comportant un connecteur coaxial pour la télévision, une prise comportant un connecteur au standard RJ45 pour l'échange de données via Internet. Aujourd'hui, la distribution des services converge vers l'emploi d'un câble comportant plusieurs paires et d'une prise multimédia comportant un connecteur unique au standard RJ45. Cependant, comme les appareils ne sont pas adaptés pour se connecter sur ce type de connecteur, des adaptateurs restent nécessaires. En outre, si plusieurs services sont disponibles sur un même connecteur de la prise, il est nécessaire d'employer un boîtier de répartition qui permet de distribuer les bons signaux sur chaque appareil connecté en sortie. Un câble spécifique doit alors être employé entre le connecteur et le boîtier de répartition.

Par conséquent, la solution qui consiste à équiper les habitations d'une prise multimédia dotée d'un connecteur unique standard, en l'occurrence de type RJ45, ne s'avère pas forcément facile d'utilisation.

Il a été proposé dans la publication brevet n°WO00/31953 de pouvoir affecter un service différent à chaque connecteur RJ45 d'une prise de l'habitation en réalisant un brassage manuel au niveau du système de brassage de l'habitation. Ainsi, chaque signal multimédia entrant, représentatif d'un service, est affecté sur un connecteur de sortie auquel est relié un câble rejoignant un connecteur d'une prise de l'habitation. Dans cette solution, attribuer un service à une prise de l'habitation nécessite à l'opérateur de tirer un câble au niveau du système de brassage entre une entrée correspondant audit service et un connecteur de sortie relié à la prise. Cette solution est peu conviviale pour une utilisation dans une habitation et est mise en oeuvre avec une prise comportant un connecteur au standard RJ45, auquel il est difficile de raccorder un appareil, sans adaptateur.

La publication de brevet n° US 2006/239425 divulgue une passerelle résidentielle permettant l'accès à un réseau de communication externe depuis un réseau domestique. Cette passerelle inclut un processeur de signaux xDSL vers ou en provenance du réseau externe sur une première ligne téléphonique, un processeur HomePNA de signaux en provenance ou vers le réseau domestique sur la première ligne téléphonique ou sur une ou plusieurs lignes téléphoniques supplémentaires, ainsi qu?un commutateur permettant de disconnecter le processeur HomePNA de l'une des lignes téléphoniques si des signaux VDSL interférant avec les signaux HomePNA sont présents sur au moins une des lignes téléphoniques.

Le but de l'invention est de proposer un système de brassage qui permet à l'utilisateur de pouvoir choisir aisément de distribuer un ou plusieurs services sur chaque prise de son habitation, sans tirer de câble.

### Exposé de l'invention

Ce but est atteint par un système de brassage multimédia comportant :
- une première entrée destinée à recevoir des premiers signaux multimédias, représentatifs d'un service de téléphonie sur IP, une deuxième entrée destinée à recevoir des deuxièmes signaux multimédias, représentatifs d'un service d'échange de données à haut débit ou à très haut débit, une troisième entrée recevant des troisièmes signaux multimédias représentatifs d'un service de téléphonie analogique, et au moins un connecteur de sortie de type RJ45,
- un dispositif de sélection comportant un sélecteur à organe manuel déplaçable entre plusieurs positions distinctes,
- des premiers moyens de commutation actionnables mécaniquement par l'organe manuel du sélecteur en fonction de sa position pour sélectionner, vers le connecteur de sortie, les premiers signaux multimédias et/ou les deuxièmes signaux multimédias,
- des moyens de déconnexion du service de téléphonie sur IP et du service de téléphonie analogique lorsque l'organe manuel du sélecteur est dans une position pour sélectionner les signaux multimédias représentatifs du service d'échange à très haut débit,
- les moyens de déconnexion comportant des deuxièmes moyens de commutation agencés dans une prise multimédia connectée au connecteur de sortie via un câble ethernet et commandés par le sélecteur.

Selon une particularité, les moyens de commutation comportent au moins un interrupteur à lame souple.

Selon une autre particularité, le sélecteur comporte un aimant permanent solidaire en mouvement de l'organe manuel pour commuter chaque interrupteur à lame souple selon la position de l'organe manuel.

Selon une autre particularité, le sélecteur comporte un commutateur permettant de sélectionner les premiers signaux multimédias ou les troisièmes signaux multimédias à envoyer vers le connecteur de sortie.

Selon une autre particularité, les moyens de commutation comportent deux relais commandés en parallèle.

Selon une autre particularité, les moyens de déconnexion comprennent un interrupteur de commande d'un circuit d'alimentation des deux relais, ledit interrupteur étant actionné à la fermeture lorsque l'organe manuel du sélecteur est dans une position pour sélectionner les signaux multimédias représentatifs du service d'échange à très haut débit.

Selon une autre particularité, la prise multimédia comporte au moins un connecteur de type RJ45 et un connecteur de type RJ11.

### Brève description des figures

D'autres caractéristiques et avantages vont apparaître dans la description détaillée qui suit faite en regard des dessins annexés dans lesquels :
- la figure 1 représente le système de brassage de l'invention,
- la figure 2 représente un premier mode de réalisation d'un sélecteur employé dans le système de l'invention,
- la figure 3 représente le schéma de fonctionnement du sélecteur représenté sur la figure 2,
- la figure 4 représente un deuxième mode de réalisation d'un sélecteur employé dans le système de l'invention,
- la figure 5 représente le schéma de fonctionnement du sélecteur représenté sur la figure 4,
- la figure 6 représente, de manière schématique, une prise multimédia connectée à un sélecteur selon le deuxième mode de réalisation.

### Description détaillée d'au moins un mode de réalisation

L'invention concerne un système de brassage multimédia. Ce système de brassage multimédia est préférentiellement placé au niveau du système central de distribution électrique et de communication d'une habitation.

Dans la suite de la description :
- Par service, il faut comprendre un service de téléphonie analogique, un service de téléphonie sur IP, un service d'échange de données sur IP à haut débit (par exemple de 100 Mbps), un service d'échange de données sur IP à très haut débit (par exemple de 1Gbps). Le service d'échange de données sur IP à haut débit ou à très haut débit est employé pour accéder, selon l'appareil connecté, à Internet ou à un service de télévision sur IP.
- Par signaux multimédias, il faut comprendre des signaux analogiques ou numériques permettant de fournir un service.
- Par prise P multimédia, il faut comprendre une prise comportant plusieurs connecteurs femelles, par exemple de type RJ11 et/ou RJ45, vers chacun desquels est véhiculé un signal multimédia.
- Par connecteur de type RJ45, il faut comprendre le connecteur standardisé comportant quatre paires de fils, les fils étant numérotés de 1 à 8 et les paires étant ainsi désignées (1-2), (4-5), (3-6) et (7-8). Le service de téléphonie sur IP ou analogique est distribué sur la paire (4-5), Le service d'échange de données sur IP à haut débit est distribué sur les paires (1-2) et (3-6) et le service d'échange de données sur IP à très haut débit est distribué sur toutes les paires du connecteur RJ45.
- Par connecteur de type RJ11, il faut comprendre le connecteur standardisé comportant deux paires de fils.

Selon l'invention, le système de brassage reçoit en entrée différents signaux multimédias.

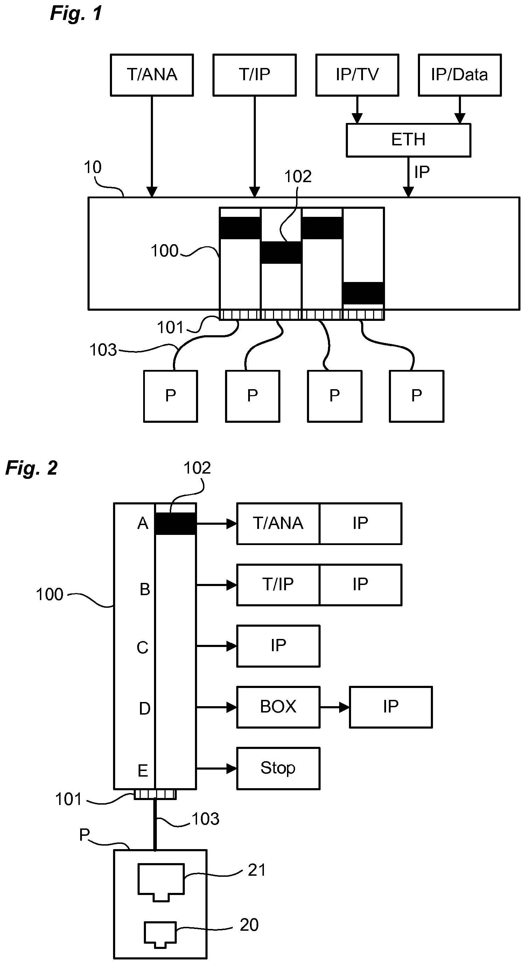

En référence à la figure 1, le système de brassage reçoit des premiers signaux multimédias représentatifs d'un service de téléphonie analogique (désigné T/ANA). Il reçoit également d'un boîtier Internet des deuxièmes signaux multimédias représentatifs d'un service de téléphonie sur IP (désigné T/IP), des troisièmes signaux multimédias représentatifs d'un service de télévision sur IP (désigné IP/TV) ou d'un service de distribution de données (IP/Data). Le système de brassage comporte un contrôleur Ethernet ETH permettant d'allouer le service de télévision (IP/TV) ou le service de distribution de données (IP/Data) selon l'appareil connecté sur la prise P multimédia située en aval. En sortie du contrôleur Ethernet ETH, des signaux représentatifs d'un seul service d'échange de données (désigné IP) sont donc distribués vers la prise P multimédia. D'autres signaux multimédias, par exemple représentatifs de services liées à l'efficacité énergétique de l'habitation peuvent par exemple venir en entrée du système pour se connecter sur internet ou dialoguer avec un équipement raccordé sur la prise P multimédia.

Le système comporte un dispositif de sélection destiné à sélectionner les signaux multimédias selon une sélection manuelle effectuée par l'utilisateur. Le dispositif de sélection 10 comporte un ou plusieurs sélecteurs 100 identiques. Chaque sélecteur 100 reçoit en entrée tous les signaux multimédias entrants et comporte en sortie un connecteur de sortie 101, par exemple de type RJ45, auquel vient se connecter, via un câble 103, une prise P multimédia de l'habitation. Chaque sélecteur 100 comporte par exemple un boîtier et un organe manuel 102 déplaçable permettant de choisir un ou plusieurs services à distribuer sur ladite prise multimédia. Un dispositif de sélection peut par exemple comporter quatre sélecteurs. Si l'habitation comporte plus de quatre prises multimédias, un second dispositif de sélection peut être ajouté. Les signaux multimédias entrants sont alors dupliqués sur le nouveau dispositif de sélection. Selon l'invention, un même sélecteur pourra par exemple comporter au moins deux connecteurs de sortie, les même signaux seront alors distribués sur les deux connecteurs de sortie.

Selon l'invention, le câble 103 employé pour relier le connecteur de sortie 101 à la prise multimédia est un câble Ethernet standard quatre paires de catégorie 5E ou 6.

Chaque sélecteur 100 comporte dans son boîtier des moyens de commutation permettant de sélectionner et/ou d'aiguiller les signaux multimédias entrants vers le connecteur de sortie 101. Les moyens de commutation sont par exemple des interrupteurs à lame souple correctement agencés pour basculer entre une première position et une deuxième position en fonction de la position de l'organe manuel 102 du sélecteur. Les interrupteurs à lame souple sont par exemple commutés à l'aide d'au moins un aimant permanent, solidaire en mouvement de l'organe manuel 102. Chaque interrupteur à lame souple est par exemple une ampoule à actionnement magnétique de type "reed".

Selon l'invention, chaque prise P multimédia comporte plusieurs connecteurs distincts permettant de distribuer le ou les services sélectionnés à destination de chaque appareil connecté. Chaque prise P multimédia comporte ainsi au moins un connecteur de type RJ45 et au moins un connecteur de type RJ11. Les quatre paires du connecteur de sortie 101 du dispositif de sélection sont ainsi amenées via un câble 103 de type RJ45 à la prise P multimédia et deux paires (4-5) sont dérivées vers le connecteur de type RJ11 de la prise P multimédia. En fonction de la position de l'organe manuel 102 du sélecteur 100, des signaux seront véhiculés sur certaines paires du connecteur de sortie 101 ou sur toutes les paires de celui-ci.

Chaque prise P multimédia peut également comporter un connecteur coaxial destiné à distribuer le service de télévision de manière indépendante. Dans ce cas, un câble distinct est tiré jusqu'au connecteur coaxial de la prise P multimédia.

La figure 2 propose exemple de sélecteur. Ce sélecteur 100 est adapté pour fonctionner avec une prise P multimédia comportant au moins deux connecteurs distincts, un connecteur 20 de type RJ11 et un connecteur 21 de type RJ45.

Dans cet exemple de sélecteur l'organe manuel 102 du sélecteur peut prendre les cinq positions suivantes :
- Une première position A correspond à la distribution d'un service de téléphonie analogique (T/ANA) sur le connecteur 20 de type RJ11 de la prise P multimédia et d'un service d'échange de données à haut débit (IP) sur le connecteur 21 de type RJ45 de la prise P multimédia.
- Une deuxième position B correspond à la distribution d'un service de téléphonie sur IP (T/IP) sur le connecteur 20 de type RJ11 de la prise P multimédia et d'un service d'échange de données à haut débit (IP) sur le connecteur 21 de type RJ45 de la prise P multimédia.
- Une troisième position C correspond à la distribution d'un service d'échange de données à très haut débit (IP) sur le connecteur 21 de type RJ45 de la prise P multimédia.
- Une quatrième position D correspond à la distribution des signaux multimédias à destination d'un boîtier Internet (BOX) connecté sur le connecteur 21 de type RJ45 de la prise P multimédia, si ce boîtier internet n'est pas présent en amont du système de brassage. Ce boîtier internet permet de distribuer un service d'échange de données (IP).
- Une cinquième position E correspond à un arrêt de distribution des services sur la prise P multimédia (STOP)

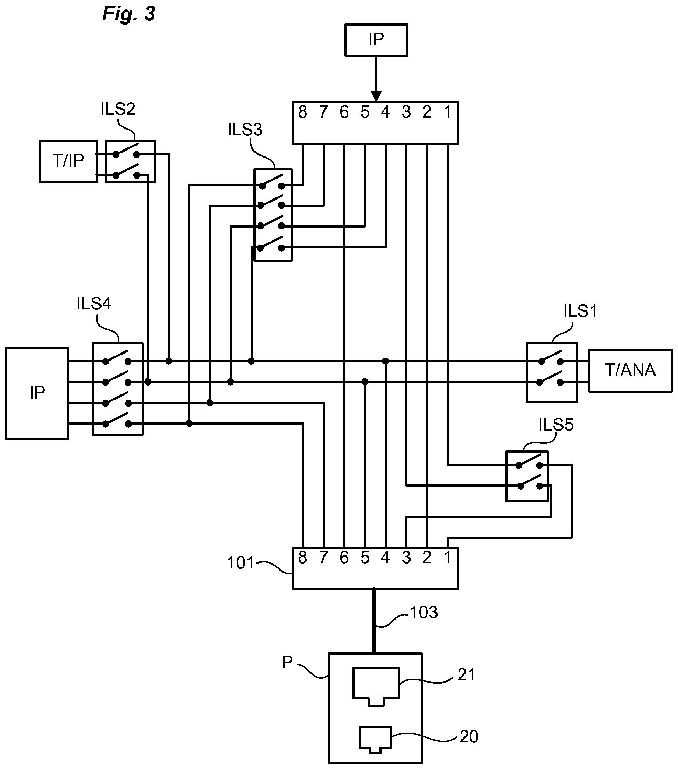

Dans cet exemple l'architecture du sélecteur 100 est représentée sur la figure 3. Cette figure 3 représente les quatre paires de fils connectées au connecteur de sortie 101, les signaux multimédia entrants pour chacun des services à sélectionner et les interrupteurs à lame souple à commuter en fonction du ou des services sélectionnés grâce à l'organe manuel 102.

Plus précisément, l'architecture du sélecteur 100 est la suivante :
- Un premier groupe ILS1 d'interrupteurs à lame souple, dédié au service de téléphonie analogique (T/ANA), est agencé pour commander les signaux multimédias circulant sur la paire (4-5).
- Un deuxième groupe ILS2 d'interrupteurs à lame souple, dédié au service de téléphonie sur IP, est agencé pour commander les signaux multimédias circulant sur la paire (4-5).
- Un troisième groupe ILS3 d'interrupteurs à lame souple, dédié au service d'échange de données à très haut débit, est agencé pour commander les signaux multimédias circulant sur les paires (4-5) et (7-8).
- Un quatrième groupe ILS4 d'interrupteurs à lame souple, dédié à la distribution des signaux multimédia vers un boîtier Internet, est agencé pour commander les signaux multimédias circulant sur les paires (4-5) et (7-8).
- Un cinquième groupe ILS5 d'interrupteurs à lame souple, dédié à l'arrêt de distribution de service, est agencé pour commander les signaux multimédias circulant sur les fils 1 et 3.

Ainsi décrit, selon la position prise par l'organe manuel, le sélecteur 100 fonctionne de la manière suivante :
- Dans la première position A, les interrupteurs du premier groupe ILS1 sont fermés. Les interrupteurs du deuxième groupe ILS2, du troisième groupe ILS3 et du quatrième groupe ILS4 sont ouverts. Les interrupteurs du cinquième groupe ILS5 sont fermés. La paire (4-5) du connecteur de sortie 101 est connectée aux signaux multimédias du service de téléphonie analogique et les paires (1-2) et (3-6) du connecteur de sortie 101 sont connectées pour recevoir des signaux multimédias représentatifs du service d'échange de données à haut débit (IP).
- Dans la deuxième position B, les interrupteurs du deuxième groupe ILS2 sont fermés. Les interrupteurs du premier groupe ILS1, du troisième groupe ILS3 et du quatrième groupe ILS4 sont ouverts. Les interrupteurs du cinquième groupe ILS5 sont fermés. La paire (4-5) du connecteur de sortie 101 est connectée pour recevoir les signaux multimédias du service de téléphonie sur IP (T/IP) et les paires (1-2) et (3-6) du connecteur de sortie sont connectées pour recevoir des signaux multimédias représentatifs du service d'échange de données à haut débit (IP).
- Dans la troisième position C, les interrupteurs du troisième groupe (ILS3) sont fermés. Les interrupteurs du premier groupe (ILS1), du deuxième groupe (ILS2) et du quatrième groupe (ILS4) sont ouverts. Les interrupteurs du cinquième groupe (ILS5) sont fermés. Les quatre paires du connecteur de sortie 101 sont connectées pour recevoir les signaux multimédias représentatifs du service d'échange de données à très haut débit (IP).
- Dans la quatrième position D, les interrupteurs du quatrième groupe (ILS4) sont fermés. Les interrupteurs du premier groupe (ILS1), du deuxième groupe (ILS2) et du troisième groupe (ILS3) sont ouverts. Les interrupteurs du cinquième groupe (ILS5) sont fermés. Les paires (4-5) et (7-8) du connecteur de sortie 101 sont connectées pour recevoir des signaux multimédias permettant le branchement d'un boîtier internet (BOX) sur la prise P multimédia si celui-ci n'a pas été branché en amont du système de brassage. Les paires (1-2) et (3-6) sont également connectées pour recevoir des signaux multimédias représentatifs du service d'échange de données à haut débit (IP). Dans cette situation, le service de télévision ou de téléphonie sur IP ne sera disponible que sur cette prise P multimédia et ne pourra pas être diffusé dans toute l'habitation.
- Dans la cinquième position E, les interrupteurs du cinquième groupe ILS5 sont ouverts. Les interrupteurs du premier groupe ILS1, du deuxième groupe ILS2, du troisième groupe ILS3 et du quatrième groupe ILS4 sont également ouverts. Toutes les paires sont donc déconnectées.

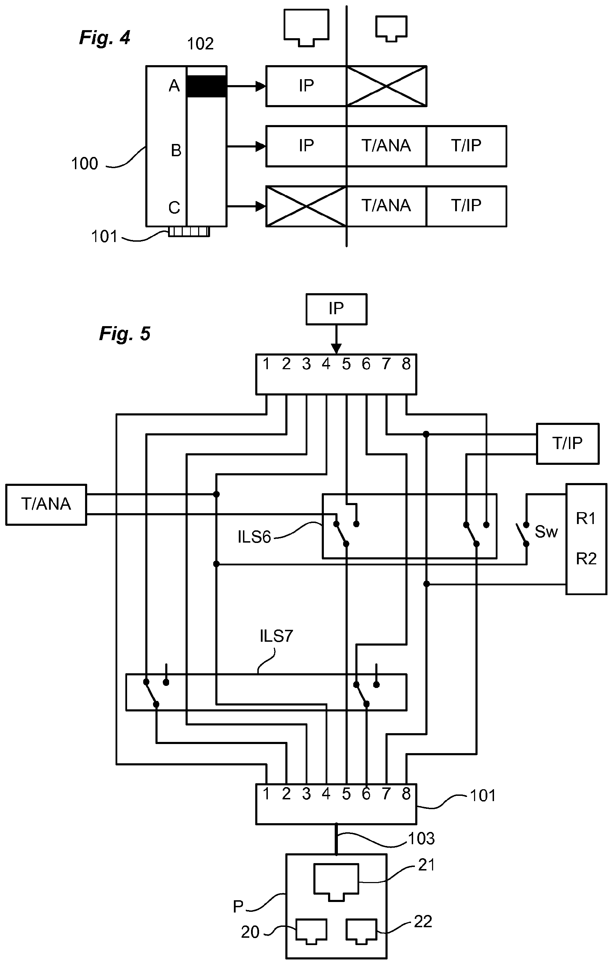

Dans un premier mode de réalisation de l'invention représenté sur les figures 4 et 5, le sélecteur 100 est à seulement trois positions ce qui permet de limiter le nombre d'interrupteurs à lame souple employés et donc de gagner en encombrement. Dans la description de ce mode de réalisation, nous conservons les mêmes références sur les figures 4 et 5 que sur les figures 2 et 3 dans la mesure où la fonctionnalité de l'élément reste identique. Cette architecture est adaptée pour fonctionner avec une prise P multimédia comportant un connecteur 21 de type RJ45 et deux connecteurs 20, 22 de type RJ11. Les trois positions de l'organe manuel 102 du sélecteur 100 sont les suivantes :
- Une première position A correspond à la distribution d'un service d'échange de données à très haut débit.
- Une deuxième position B correspond à la distribution d'un service d'échange de données à haut débit, à la distribution d'un service de téléphonie sur IP sur l'un des connecteurs de type RJ11 de la prise multimédia et à la distribution d'un service de téléphonie analogique sur l'autre des connecteurs de type RJ11 de la prise multimédia.
- Une troisième position C correspond à la distribution d'un service de téléphonie sur IP sur le premier connecteur de type RJ11 de la prise multimédia et à la distribution d'un service de téléphonie analogique sur le deuxième connecteur 22 de type RJ11 de la prise P multimédia.

Dans ce premier mode de réalisation, l'architecture du sélecteur est présentée sur la figure 5. Le sélecteur 100 comporte ainsi :
- Un premier groupe ILS6 d'interrupteurs à lame souple dédié à la distribution du service de téléphonie analogique (T/ANA) et du service de téléphonie sur IP (T/IP) ou du service d'échange de données à très haut débit (IP) et commutable entre une position initiale et une position finale.
- Un deuxième groupe ILS7 d'interrupteurs à lame souple dédié à l'interruption de la distribution du service d'échange de données à haut débit et à très haut débit et commutable entre une position initiale et une position finale.

Dans ce premier mode de réalisation, les interrupteurs à lame souple du premier groupe sont employés comme des aiguilleurs de signaux.

Ainsi décrit, selon la position prise par l'organe manuel 102, le sélecteur 100 fonctionne de la manière suivante :
- Dans la première position A, les interrupteurs à lame souple du premier groupe ILS6 sont commutés dans leur position finale. Les interrupteurs à lame souple du deuxième groupe ILS7 sont maintenus en position initiale. Toutes les paires du connecteur de sortie 101 sont alors connectées pour recevoir les signaux multimédias représentatifs du service d'échange de données à très haut débit (IP).
- Dans la deuxième position B, les interrupteurs du premier groupe ILS6 et les interrupteurs du deuxième groupe ILS7 sont maintenus dans leur position initiale. Les paires (1-2) et (3-6) du connecteur de sortie 101 sont connectées pour recevoir les signaux multimédias représentatifs du service d'échange de données à haut débit. Les paires (4-5) et (7-8) du connecteur de sortie sont également connectées pour recevoir, sur le premier connecteur 20 de type RJ11 de la prise P multimédia, les signaux multimédias représentatifs de la téléphonie sur IP (T/IP) et, sur le deuxième connecteur 22 de type RJ11 de la prise P multimédia, les signaux multimédias représentatifs du service de téléphonie analogique (T/ANA).
- Dans la troisième position C, les interrupteurs du deuxième groupe ILS7 sont commutés en position finale et les interrupteurs du premier groupe ILS6 sont maintenus en position initiale. Les paires (4-5) et (7-8) du connecteur de sortie sont également connectées pour recevoir, sur le premier connecteur 20 de type RJ11 de la prise multimédia, les signaux multimédias représentatifs du service de téléphonie sur IP (T/IP) et, sur le deuxième connecteur 22, les signaux multimédias représentatifs du service de téléphonie analogique (T/ANA).

Dans ce premier mode de réalisation, lorsque l'organe manuel 102 du sélecteur 100 est en première position, pour éviter de dégrader les signaux à très haut débit disponibles sur le connecteur RJ45 par la connexion d'un téléphone sur le connecteur RJ11 de la prise multimédia, le système comporte des moyens de déconnexion des services de téléphonie sur IP (T/IP) et de téléphonie analogique (T/ANA). Ainsi, pour garantir un signal à très haut débit lorsque l'organe manuel 102 est en première position, toutes les paires du connecteur de sortie 101 doivent être connectées uniquement au connecteur 21 de type RJ45 de la prise P multimédia. En outre, lorsque l'organe manuel 102 du sélecteur 100 est en seconde et troisième position, pour éviter de dégrader les signaux de téléphonie sur IP (T/IP) et de téléphonie analogique (T/ANA) par la connexion d'un appareil sur le connecteur RJ45 de la prise multimédia, le système comporte des moyens de déconnexion des services de très haut débit sur la prise multimédia P. Ainsi, pour garantir les signaux de téléphonie sur IP (T/IP) et téléphonie analogique (T/ANA) lorsque l'organe manuel 102 est en seconde et troisième position, les paires (4-5) et (7-8) du connecteur de sortie 101 doivent être connectées uniquement au connecteur 20 et 22 de type RJ11 de la prise P multimédia.

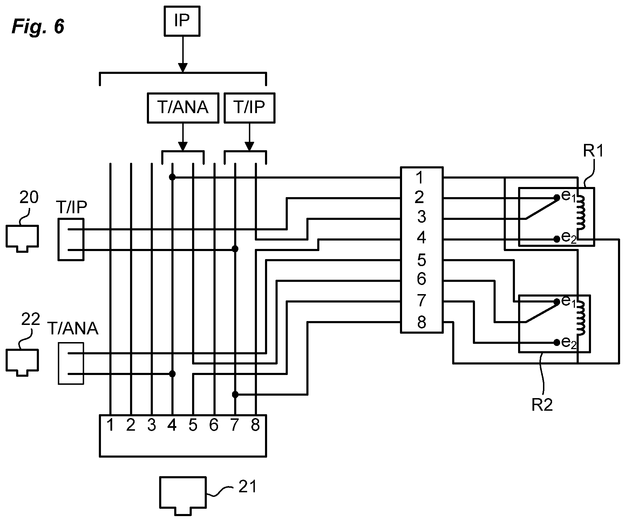

Ces moyens de déconnexion comportent par exemple un interrupteur Sw situé dans le boîtier du sélecteur 100 et commutable entre deux positions et deux relais R1, R2 commandés en parallèle, situés dans la prise P multimédia et actionnables selon la position dudit interrupteur Sw. La figure 6 représente le schéma de la prise multimédia comportant les deux relais R1, R2.

Lorsque l'organe manuel 102 du sélecteur 100 est en deuxième ou troisième position, l'interrupteur Sw est en position d'ouverture et les deux relais R1, R2, non alimentés, sont dans un premier état e₁. Ils sont alors agencés pour véhiculer les signaux multimédias représentatifs du service de téléphonie sur IP (T/IP) sur la paire (7-8) vers le premier connecteur 20 de type RJ11 de la prise P multimédia et les signaux multimédias représentatifs du service de téléphonie analogique (T/ANA) sur la paire (4-5) vers le deuxième connecteur 22 de la prise P multimédia.

Lorsque l'organe manuel est en première position, l'interrupteur Sw est actionné vers une position de fermeture. Dans cette position de fermeture, l'interrupteur Sw ferme un circuit d'alimentation permettant d'alimenter les deux relais R1, R2 pour les commuter dans un deuxième état e₂. Ce circuit d'alimentation est par exemple connecté entre deux fils des paires reliées au connecteur de sortie 101. Dans leur deuxième état e₂, les relais R1, R2 sont agencés pour véhiculer les signaux multimédias représentatifs du service d'échange de données à très haut débit (IP) vers toutes les paires du connecteur 21 de type RJ45 de la prise P multimédia.

D'autres moyens de déconnexion peuvent bien entendu être prévus. Il peut s'agir par exemple de moyens mécaniques situés dans la prise multimédia pour déconnecter le service de téléphonie analogique ou de téléphonie sur IP lorsqu'un connecteur mâle est inséré dans un connecteur RJ11 femelle de la prise multimédia. Dans ce cas, il pourra par exemple s'agir d'un aimant positionné sur le volet du connecteur RJ11 et apte à commander le relais lorsqu'un connecteur mâle est inséré dans un connecteur RJ11 femelle de la prise multimédia.

Dans un deuxième mode de réalisation, le sélecteur décrit ci-dessus en liaison avec les figures 4 et 5 est associé à une prise P multimédia qui comporte un connecteur de type RJ45 et un seul connecteur de type RJ11. Dans ce cas, le sélecteur comporte un commutateur supplémentaire permettant de définir les signaux multimédias envoyés sur la paire (4-5), c'est-à-dire les signaux multimédias représentatifs de la téléphonie analogique ou les signaux multimédias représentatifs de la téléphonie sur IP. Dans ce mode de réalisation, Le sélecteur 100 comprend également l'interrupteur Sw qui commande un seul relais, situé dans la prise P multimédia et actionnable entre deux états selon la position dudit interrupteur Sw. Dans son deuxième état, ce relais permet de véhiculer les signaux multimédias représentatifs du service d'échange de données à très haut débit (IP) vers toutes les paires du connecteur de type RJ45 de la prise P multimédia.

Selon l'invention, l'une des paires menant au connecteur de sortie 101 pourrait également être employée pour véhiculer des signaux de télévision à haute fréquence. Le service serait par exemple disponible sur la paire (7-8) du connecteur de sortie. Cette paire (7-8) serait alors connectée à un connecteur de type coaxial de la prise P multimédia. Dans cette situation, les signaux de télévision à haute fréquence seraient commandés par des interrupteurs haute-fréquence, par exemple de type MEMS. En utilisant l'exemple de sélecteur en rapport avec les figures 2 et 3, il s'agirait de proposer ce service de télévision dans la première position A et la deuxième position B du sélecteur, en complément des services déjà disponibles à ces deux positions. Dans le premier mode de réalisation de l'invention, le service de télévision viendrait se substituer à l'un des deux services de téléphonie.

La solution de l'invention présente donc de nombreux avantages. Elle permet à un utilisateur de pouvoir profiter de toutes les fonctionnalités multimédias dans l'ensemble de son habitation et de faire évoluer aisément l'installation de son habitation en fonction des appareils à connecter. Elle offre un encombrement réduit et une architecture entièrement mécanique et passive. Elle permet en outre l'emploi de câbles standards, faciles à se procurer.

## Revendications

1. Système de brassage multimédia comportant :
- une première entrée destinée à recevoir des premiers signaux multimédias, représentatifs d'un service de téléphonie sur IP (T/IP), une deuxième entrée destinée à recevoir des deuxièmes signaux multimédias, représentatifs d'un service d'échange de données à haut débit ou à très haut débit (IP), une troisième entrée recevant des troisièmes signaux multimédias représentatifs d'un service de téléphonie analogique (T/ANA), et au moins un connecteur de sortie (101) de type RJ45,
- un dispositif de sélection (10) comportant un sélecteur (100) à organe manuel déplaçable entre plusieurs positions distinctes,
- des premiers moyens de commutation actionnables mécaniquement par l'organe manuel (102) du sélecteur (100) en fonction de sa position pour sélectionner, vers le connecteur de sortie (101), les premiers signaux multimédias et/ou les deuxièmes signaux multimédias,
**caractérisé en ce que** le système de brassage comporte :
- des moyens de déconnexion du service de téléphonie sur IP (T/IP) et du service de téléphonie analogique (T/ANA) lorsque l'organe manuel (102) du sélecteur (100) est dans une position pour sélectionner les signaux multimédias représentatifs du service d'échange à très haut débit (IP),
- les moyens de déconnexion comportant des deuxièmes moyens de commutation agencés dans une prise multimédia (P) connectée au connecteur de sortie (101) via un câble (103) ethernet et commandés par le sélecteur (100).

2. Système de brassage multimédia selon la revendication 1, **caractérisé en ce que** les premiers moyens de commutation comportent au moins un interrupteur à lame souple.

3. Système selon la revendication 1 ou 2, **caractérisé en ce que** le sélecteur comporte un aimant permanent solidaire en mouvement de l'organe manuel pour commuter chaque interrupteur à lame souple selon la position de l'organe manuel (102).

4. Système selon la revendication 1, **caractérisé en ce que** le sélecteur comporte un commutateur permettant de sélectionner les premiers signaux multimédias ou les troisièmes signaux multimédias à envoyer vers le connecteur de sortie (101).

5. Système selon la revendication 1, **caractérisé en ce que** les deuxièmes moyens de commutation comportent deux relais (R1, R2) commandés en parallèle.

6. Système selon la revendication 1, **caractérisé en ce que** les moyens de déconnexion comprennent un interrupteur (Sw) de commande d'un circuit d'alimentation des deux relais (R1, R2), ledit interrupteur étant actionné à la fermeture lorsque l'organe manuel (102) du sélecteur (100) est dans une position pour sélectionner les signaux multimédias représentatifs du service d'échange à très haut débit (IP).

7. Système selon la revendication 6, **caractérisé en ce que** la prise multimédia (P) comporte au moins un connecteur (21) de type RJ45 et un connecteur (20) de type RJ11.

## Patentansprüche

1. Multimedia-Schaltsystem, umfassend:
- einen ersten Eingang, der dazu bestimmt ist, erste Multimediasignale zu empfangen, die für einen IP-Telefondienst (T/IP) repräsentativ sind, einen zweiten Eingang, der dazu bestimmt ist, zweite Multimediasignale zu empfangen, die für einen Datenaustausch hoher Kapazität oder sehr hoher Kapazität (IP) repräsentativ sind, einen dritten Eingang, der dritte Multimediasignale empfängt, die für einen analogen Telefondienst (T/ANA) repräsentativ sind, und mindestens einen Ausgangsanschluss (101) vom Typ RJ45,
- eine Auswahlvorrichtung (10), umfassend einen Wähler (100) mit manuellem Auswahlelement, das zwischen mehreren unterschiedlichen Positionen verschiebbar ist,
- erste Umschaltmittel, die mechanisch von dem manuellen Element (102) des Wählers (100) in Abhängigkeit von seiner Position betätigbar sind, um zu dem Ausgangsanschluss (101) die ersten Multimediasignale und/oder die zweiten Multimediasignale auszuwählen,
**dadurch gekennzeichnet, dass** das Schaltsystem umfasst:
- Mittel zum Trennen des IP-Telefondienstes (T/IP) und des analogen Telefondienstes (T/ANA), wenn das manuelle Element (102) des Wählers (100) in einer Position ist, um die Multimediasignale, die für den Austauschdienst mit sehr hoher Kapazität (IP) repräsentativ sind, auszuwählen,
- die Trennungsmittel zweite Umschaltmittel umfassen, die in einem Multimediaanschluss (P), der an den Ausgangsanschluss (101) über ein Ethernet-Kabel (103) angeschlossen ist, angeordnet sind und von dem Wähler (100) gesteuert werden.

2. Multimedia-Schaltsystem nach Anspruch 1, **dadurch gekennzeichnet, dass** die ersten Umschaltmittel mindestens einen Reed-Schalter umfassen.

3. System nach Anspruch 1 oder 2, **dadurch gekennzeichnet, dass** der Wähler einen Dauermagneten umfasst, der in Bewegung mit dem manuellen Element verbunden ist, um jeden Reed-Schalter je nach der Position des manuellen Elements (102) umzuschalten.

4. System nach Anspruch 1, **dadurch gekennzeichnet, dass** der Wähler einen Umschalter umfasst, der es ermöglicht, die ersten Multimediasignale oder die dritten Multimediasignale, die zu dem Ausgangsanschluss (101) zu senden sind, auszuwählen.

5. System nach Anspruch 1, **dadurch gekennzeichnet, dass** die zweiten Umschaltmittel zwei parallel geschaltete Relais (R1, R2) umfassen.

6. System nach Anspruch 1, **dadurch gekennzeichnet, dass** die Trennungsmittel einen Steuerschalter (Sw) einer Versorgungsschaltung der zwei Relais (R1, R2) umfassen, wobei der Schalter auf Schließen gestellt wird, wenn das manuelle Element (102) des Wählers (100) in einer Position ist, um die Multimediasignale, die für den Austauschdienst mit sehr hoher Kapazität (IP) repräsentativ sind, auszuwählen.

7. System nach Anspruch 6, **dadurch gekennzeichnet, dass** der Multimediaanschluss (P) mindestens einen Anschluss (21) vom Typ RJ45 und einen Anschluss (20) vom Typ RJ11 umfasst.

## Claims

1. System for switching multimedia, including:
- a first input intended to receive first multimedia signals that are representative of a voice over IP service (T/IP), a second input intended to receive second multimedia signals that are representative of a broadband or superfast broadband data exchange service (IP), and a third input receiving third multimedia signals that are representative of an analogue telephony service (T/ANA), and at least one RJ45 output connector (101);
- a selecting device (10) including a selector (100) that has a manual member that is movable between two distinct positions;
- first switching means that are mechanically actuatable by the manual member (102) of the selector (100) depending on its position in order to select, for transfer to the output connector (101), the first multimedia signals and/or the second multimedia signals;
**characterized in that** the switching system includes:
- means for disconnecting the voice over IP service (T/IP) and the analogue telephony service (T/ANA) when the manual member (102) of the selector (100) is in a position selecting the multimedia signals that are representative of the superfast broadband exchange service (IP);
- the disconnecting means including second switching means that are arranged in a multimedia socket (P), which is connected to the output connector (101) via an Ethernet cable (103), and that are controlled by the selector (100).

2. System for switching multimedia according to Claim 1, **characterized in that** the first switching means include at least one reed switch.

3. System according to Claim 1 or 2, **characterized in that** the selector includes a permanent magnet that moves as one with the manual member, in order to switch each reed switch depending on the position of the manual member (102).

4. System according to Claim 1, **characterized in that** the selector includes a switch allowing the first multimedia signals or the third multimedia signals to be sent to the output connector (101) to be selected.

5. System according to Claim 1, **characterized in that** the second switching means include two relays (R1, R2) that are controlled in parallel.

6. System according to Claim 1, **characterized in that** the disconnecting means comprise a switch (Sw) for controlling a circuit for supplying power to the two relays (R1, R2), said switch being actuated to close when the manual member (102) of the selector (100) is in a position selecting the multimedia signals representative of the superfast broadband exchange service (IP).

7. System according to Claim 6, **characterized in that** the multimedia socket (P) includes at least one RJ45 connector (21) and one RJ11 connector (20).
